# EUROPÄISCHE PATENTSCHRIFT

(11) **EP 1 430 634 B1**
(45) Veröffentlichungstag und Bekanntmachung des Hinweises auf die Patenterteilung: **07.06.2006**
(21) Anmeldenummer: 02769943.8
(22) Anmeldetag: 12.09.2002
(51) Int. Cl.: H04L 1/18

(54) **WEITERLEITUNG VON DATENTELEGRAMMEN MIT KOPPELKNOT DATENERSATZ**
FORWARDING OF DATA MESSAGES WITH DOUBLE-NODE DATA REPLACEMENT
REACHEMINEMENT DE MESSAGES DE DONNEES AVEC REMPLACEMENT DE DONNEES DANS UN NOEUD DE COUPLAGE

(30) Priorität: 26.09.2001 DE 10147426; 27.06.2002 DE 10228822
(43) Veröffentlichungstag der Anmeldung: 23.06.2004
(73) Patentinhaber: SIEMENS AKTIENGESELLSCHAFT, 80333 München (DE)
(72) Erfinder: BRÜCKNER, Dieter, 96199 Zapfendorf (DE); KLOTZ, Dieter, 90768 Fürth (DE); KRAUSE, Karl-Heinz, 90475 Nürnberg (DE); SCHIMMER, Jürgen, 90473 Nürnberg (DE)
(86) Internationale Anmeldenummer: PCT/DE2002/003406
(87) Internationale Veröffentlichungsnummer: WO 2003/028279

(56) Entgegenhaltungen:
- EP-A- 0 866 579
- WO-A-01/15374
- US-A- 5 699 367

## Beschreibung

Die Erfindung betrifft ein Verfahren zur Fehlererkennung und Fehlervermeidung bei der Übertragung von echtzeitkritischen Daten mittels Datentelegrammen in einem Datennetz, insbesondere in einem Automatisierungssystem.

Datennetze werden aus vernetzten Datennetzknoten gebildet und ermöglichen die Kommunikation zwischen mehreren Teilnehmern. Kommunikation bedeutet dabei die Übertragung von Daten zwischen den Teilnehmern. Die zu übertragenden Daten werden dabei als Datentelegramme verschickt, das heißt, die Daten werden zu einem oder mehreren Paketen zusammengepackt und in dieser Form über das Datennetz an den entsprechenden Empfänger gesendet. Man spricht deshalb auch von Datenpaketen. Der Begriff Übertragung von Daten wird dabei im Weiteren synonym zur oben erwähnten Übertragung von Datentelegrammen oder Datenpaketen verwendet.

Zur Vernetzung werden beispielsweise bei schaltbaren Hochleistungsdatennetzen, insbesondere Ethernet, die Teilnehmern untereinander über Koppelknoten verbunden. Jeder Koppelknoten kann mit mehr als zwei Teilnehmern verbunden sein und auch selbst Teilnehmer sein. Teilnehmer sind beispielsweise Computer, speicherprogrammierbare Steuerungen (SPS) oder andere Maschinen, die elektronische Daten mit anderen Maschinen austauschen, insbesondere verarbeiten.

Aus der EP 0 866 579 A1 ist eine Datenpaket-übermittlungsmethode bekannt, wobei die Datenpakete von der Sendestation zur Empfangsstation, ohne eine individuelle Kennung aufzuweisen, übermittelt werden.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. echtzeitkritischem Datenverkehr, da ein nicht rechtzeitiges Eintreffen der Daten am Bestimmungsort zu unerwünschten Resultaten beim Teilnehmer führt.

Ebenso ist aus dem Stand der Technik die Verwendung eines synchronen, getakteten Kommunikationssystems mit Aquidistanz-Eigenschaften in einem Automatisierungssystem bekannt. Hierunter versteht man ein System aus wenigstens zwei Teilnehmern, die über ein Datennetz zum Zweck des gegenseitigen Austausches von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, z. B. speicherprogrammierbare Steuerungen (-SPS, Bewegungssteuerungen-) oder andere Kontrolleinheiten, Computer, oder Maschinen, die elektronische Daten mit anderen Maschinen austauschen, insbesondere Daten von anderen Maschinen verarbeiten, und Peripheriegeräte wie z.B. Ein-/ Ausgabe-Baugruppen, Antriebe, Aktoren, Sensoren. Unter Kontrolleinheiten werden im folgenden Regler- oder Steuerungseinheiten jeglicher Art verstanden. Zur Datenübertragung werden beispielsweise Kommunikationssysteme wie z.B. Feldbus, Profibus, Ethernet, Industrial Ethernet, FireWire oder auch PCinterne Bussysteme (PCI), etc. verwendet. Datentelegramme werden dabei von einem Teilnehmer zu einem fest vorgegebenen Sendezeitpunkt in das Datennetz eingespeist.

Automatisierungskomponenten (z.B. Steuerungen, Antriebe,...) verfügen heute oftmals über eine Schnittstelle zu einem zyklisch getakteten Kommunikationssystem. Eine Ablaufebene der Automatisierungskomponente (Fast-cycle) (z.B. Lageregelung in einer Steuerung, Drehzahl- und Drehmomentregelung eines Antriebs) ist auf den Kommunikationszyklus synchronisiert. Dadurch wird der Kommunikationstakt festgelegt. Andere, niederperformante Algorithmen (Slow-cycle) (z.B. Temperaturregelungen) der Automatisierungskomponente können ebenfalls nur über diesen Kommunikationstakt mit anderen Komponenten (z.B. Binärschalter für Lüfter, Pumpen,...) kommunizieren, obwohl ein langsamerer Zyklus ausreichend wäre. Durch Verwendung nur eines Kommunikationstaktes zur Übertragung von allen Informationen im System entstehen hohe Anforderungen an die Bandbreite der Übertragungsstrecke und an die Kommunikationsanschaltung der Komponenten.

Nicht immer können diese hohen Anforderungen erfüllt werden, und es kann zu Übertragungsfehlern kommen. Mögliche Übertragungsfehler sind:
- Nichteintreffen oder spätes Eintreffen eines Datentelegramms;
- Überlaufen des Datenpuffers in einem Koppelknoten;
- falsche Telegrammlänge eines Datentelegramms;
- ein physikalischer CRC-Fehler (Cyclic Redundancy Check) .

Bei aus dem Stand der Technik bekannten Datennetzwerken kann ein fehlerhaftes Datentelegramm bei allen Datennetzknoten, über die es weitergeleitet wird, eine Fehlerreaktion auslösen. Eine Fehlerdiagnose ist nur mit dazu vorgesehenen Telegrammen möglich. Dies führt zu einer zusätzlichen Belastung des Datennetzes, erschwert und verzögert die Fehlerdiagnose.

Der Erfindung liegt die Aufgabe zugrunde, Fehlerreaktionen in dem Übertragungspfad von fehlerhaften Datentelegrammen zu vermeiden und ein verbessertes Verfahren zur Fehlerdiagnose zu schaffen.

Die der Erfindung zugrunde liegende Aufgabe wird mit den Merkmalen der unabhängigen Patentansprüche gelöst. Spezielle Ausführungsformen der Erfindung sind in den abhängigen Patentansprüchen angegeben.

Im erfindungsgemäßen Verfahren werden fehlerhafte Datentelegramme grundsätzlich nicht weitergeleitet. Dabei ist es als vorteilhaft anzusehen, dass die fehlerhaften Datentelegramme bei keinen weiteren Datennetzknoten Fehlerreaktionen auslösen. Anstatt ein fehlerhaftes Datentelegramm weiterzuleiten, sendet ein Datennetzknoten, an dem kein fehlerfreies Datentelegramm mit einer bestimmten Kennung bis zum der Kennung zugeordneten Weiterleitungszeitpunkt eingetroffen ist oder noch während des Weiterleitungszeitpunkts eintrifft, ein Ersatztelegramm mit der Kennung aus.

Bei der Weiterleitung können das store-and-forward Verfahren und das cut-through Verfahren angewandt werden. Bei dem store-and-forward Verfahren wird ein Datentelegramm vollständig empfangen und vor der Weiterleitung zwischengespeichert. Im Gegensatz hierzu werden beim cut-through Verfahren die Daten nicht zwischengespeichert, sondern direkt vom Empfangsport an den Sendeport weitergeleitet.

Datentelegramme weisen im Allgemeinen eine Kennung, Nutzdaten und einen Transferstatus auf. Ersatztelegramme besitzen ebenso eine Kennung, Nutzdaten und einen Transferstatus. Die Kennung des Ersatztelegramms ist die des zu ersetzenden Datentelegramms. Die Nutzdaten können beliebig sein. Der Transferstatus kennzeichnet, dass es sich bei dem Ersatztelegramm um ein solches handelt. Der Transferstatus kann zusätzlich angeben, was für ein Übertragungsfehler aufgetreten ist. Vorteilhaft ist es, dass zur Fehlerdiagnose keine zusätzlichen Datentelegramme benötigt werden.

Ersatztelegramme, die bis zum Weiterleitungszeitpunkt empfangen werden, leitet ein Koppelknoten wie gewöhnliche Datentelegramme zum Weiterleitungszeitpunkt über den oder die der Kennung zugeordneten Sendeports weiter. In einer bevorzugten Ausführungsform der Erfindung kann ein Koppelknoten mehrere Datentelegramme mit der gleichen Kennung empfangen und weiterleiten.

In einem Anwendungsfall wird davon ausgegangen, dass zunächst ein Datentelegramm bei dem Zielknoten empfangen wurde, welches kein Ersatztelegramm ist, und dass dessen Nutzdaten und der zugeordnete Timer-Wert gespeichert wurden. Empfängt der Zielknoten ein weiteres Datentelegramm mit der gleichen Kennung, überprüft er zunächst, ob es sich um ein Ersatztelegramm handelt. Ist dies der Fall, werden die gespeicherten Nutzdaten und der zugeordnete Timer-Wert grundsätzlich nicht ersetzt. In einer bevorzugten Ausführungsform der Erfindung wird das Eintreffen eines Ersatztelegramms beim Zielknoten erfasst. Ist das weitere Datentelegramm kein Ersatztelegramm, wird des Weiteren anhand des gespeicherten Timer-Werts untersucht, ob die gespeicherten Nutzdaten noch aktuell sind. Sind die Nutzdaten noch aktuell, können diese ersetzt werden, müssen aber nicht ersetzt werden. Sind die gespeicherten Nutzdaten nicht aktuell, so werden sie grundsätzlich durch die Nutzdaten des weiteren Datentelegramms ersetzt. Bevor die Nutzdaten an eine Applikation des Zielknotens weitergegeben werden, müssen diese vollständig empfangen und zwischengespeichert sein, da die Weitergabe der Nutzdaten eines noch nicht vollständig empfangenen Datentelegramms zu Fehlfunktionen der Applikation führen könnte.

Im Folgenden werden bevorzugte Ausführungsformen der Erfindung mit Bezugnahme auf Zeichnungen näher erläutert. Es zeigen:
- Figur 1: ein Netzwerkdiagramm eines erfindungsgemäßen Datennetzes zur Übertragung von echtzeitkritischen Daten;
- Figur 2: eine schematische Verbindung zwischen einem Quellknoten und Zielknoten über einen Koppelknoten;
- Figur 3: den Aufbau eines DIX-Ethernet-Frames aus dem Stand der Technik und eines erfindungsgemäßen Ethernet-Frames;
- Figur 4: ein Flussdiagramm eines erfindungsgemäßen Verfahrens zur Übermittlung von echtzeitkritischen Daten bei einem Koppelknoten;
- Figur 5: ein Flussdiagramm eines erfindungsgemäßen Verfahrens zur Übermittlung von echtzeitkritischen Daten bei einem Zielknoten.

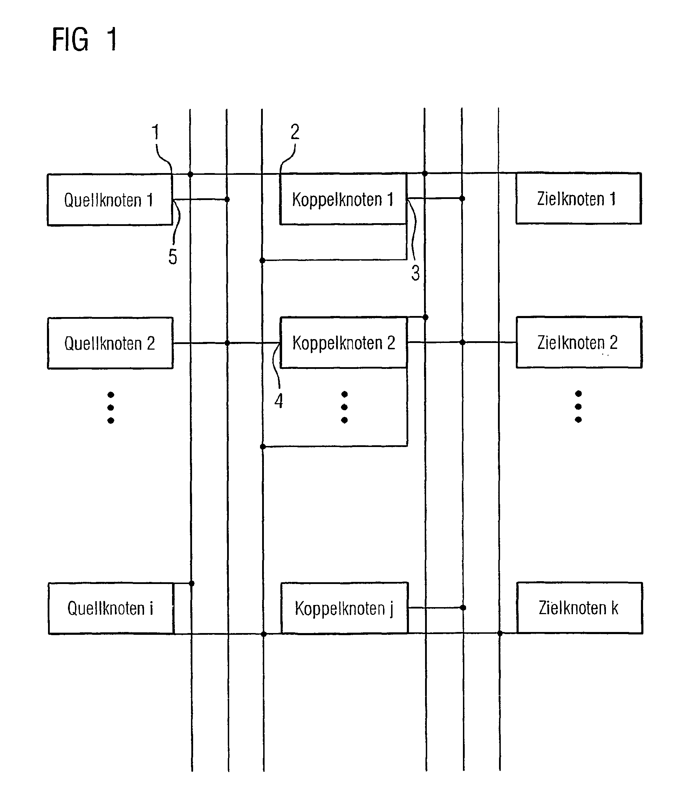

Figur 1 zeigt ein erfindungsgemäßes Datennetz zur Übertragung von echtzeitkritischen Daten. Die Quellknoten i sind mittelbar über die Koppelknoten j mit den Zielknoten k verbunden. Die Übertragung der Daten erfolgt über Datenbusse, welche Datennetzknoten miteinander verbinden. Ein Datentelegramm kann beispielsweise vom Sendeport 1 des Quellknotens i=1 über den Empfangsport 2 und den Sendeport 3 des Koppelknotens j=1 zum Empfangsport 4 des Koppelknotens j=2 weitergeleitet werden. Es kann aber auch direkt vom Sendeport 5 des Quellknotens i=1 zum Empfangsport 4 des Koppelknotens j=2 gesendet werden. Es ist auch ersichtlich, dass ein Datentelegramm vom Quellknoten i=1 entweder über den Koppelknoten j=1 oder den Koppelknoten j=2 zum Zielknoten k=1 gelangen kann. Dies zeigt, dass sowohl ein Koppelknoten als auch ein Zielknoten identische Datentelegramme, welche daher auch eine identische Kennung besitzen, über unterschiedliche Netzpfade empfangen können.

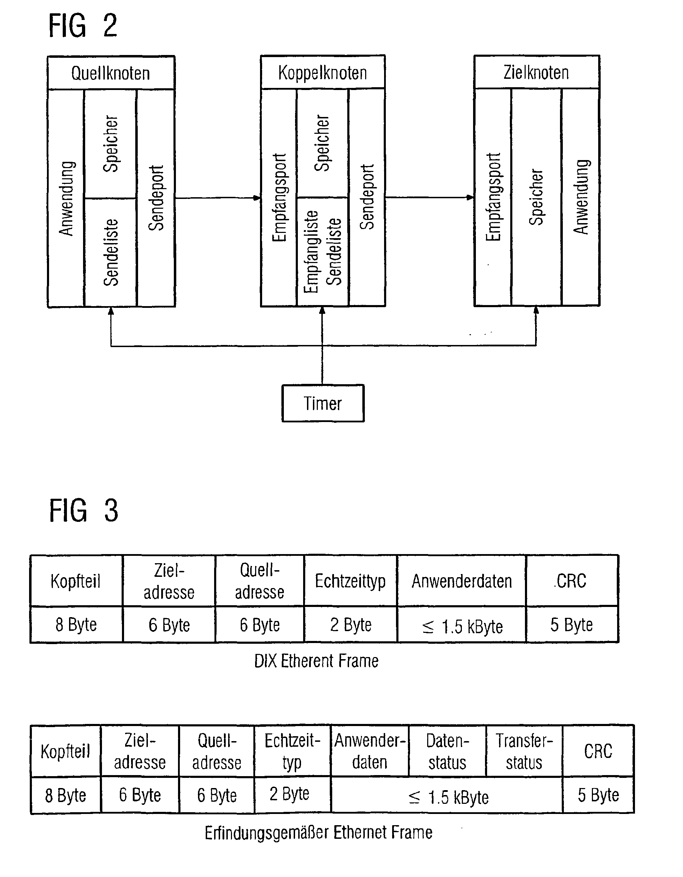

Figur 2 zeigt eine Verbindung zwischen einem Quellknoten und einem Zielknoten über einen Koppelknoten. Der Quellknoten speichert Daten, welche mit Hilfe einer Anwendung des Quellknotens ermittelt wurden in Form eines Datentelegramms mit einer bestimmten Kennung. Zu dem durch die Kennung vorgegebenen Sendezeitpunkt wird das Datentelegramm über einen Sendeport an einen oder mehrere Koppelknoten versandt. Das Datentelegramm wird an einem Empfangsport des Koppelknotens empfangen. Dann wird es entweder im Speicher bis zum Weiterleitungszeitpunkt zwischengespeichert (store-and-forward Verfahren) oder direkt an die Sendeports weitergeleitet (cut-through Verfahren). Zum Sendezeitpunkt wird das Datentelegramm über einen Sendeport zu weiteren Koppelknoten oder Zielknoten weitergeleitet. Am Empfangsport des Zielknotens wird es empfangen, hierauf gespeichert und für eine Anwendung des Zielknotens bereitgestellt. Der Quellknoten, Koppelknoten und Zielknoten sind über einen Timer synchronisiert.

Figur 3 zeigt den Aufbau eines aus dem Stand der Technik bekannten DIX-Ethernet-Frames eines Datentelegramms und eines erfindungsgemäßen Ethernet-Frames. Kopfteil, Zieladresse, Quelladresse, Echtzeittyp und CRC (cyclic redundancy check) sind gleich angeordnet und nehmen gleich viel Speicherplatz in Anspruch. Der DIX-Ethernet-Frame beinhaltet außerdem bis zu 1,5 kByte Anwenderdaten. Der gleiche Speicherplatz wird beim erfindungsgemäßen Ethernet-Frame den Anwenderdaten, Datenstatus und Transferstatus zugeordnet.

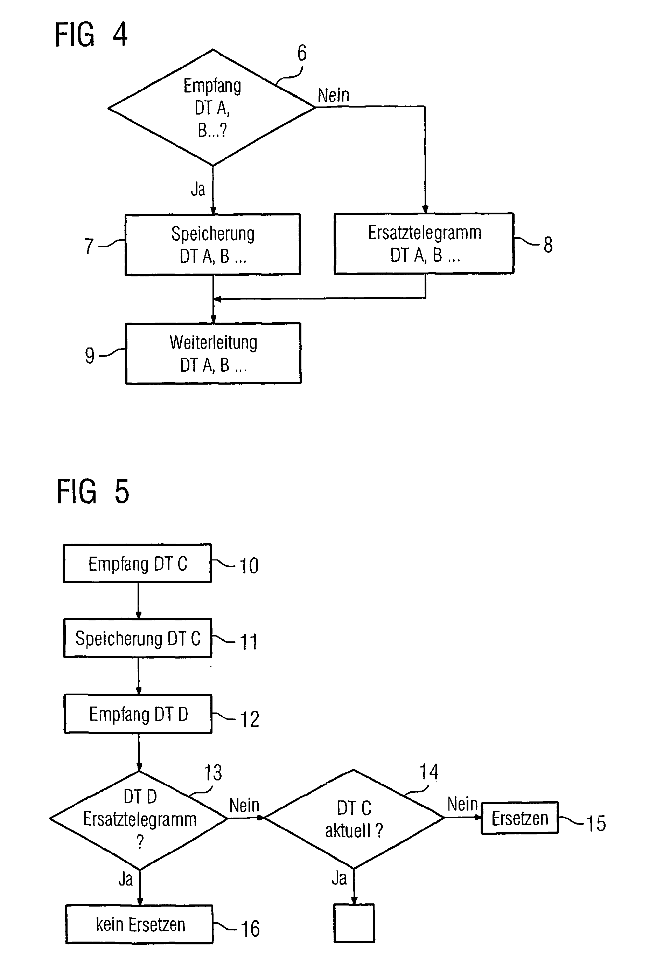

Das Flussdiagramm nach Figur 4 veranschaulicht die erfindungsgemäßen Verfahrensschritte zur Übermittlung von echtzeitkritischen Daten bei einem Koppelknoten. Der Koppelknoten erwartet zunächst das Eintreffen eines oder mehrerer fehlerfreier Datentelegramme DT A, B... mit einer bestimmten Kennung (Schritt 6). Deren Anzahl geht aus der Empfangsliste hervor. Datentelegramme DT A, B..., welche vor dem Weiterleitungszeitpunkt eintreffen, werden zunächst zwischengespeichert (store-and-forward Verfahren, Schritt 7). Im Gegensatz hierzu werden Datentelegramme, die zum Weiterleitungszeitpunkt empfangen werden, direkt vom Empfangsport an den Sendeport weitergeleitet (cut-through Verfahren). Anstelle jedes erwarteten, fehlerfreien Datentelegramms, das nicht bis zum Weiterleitungszeitpunkt empfangen wird, wird ein Ersatztelegramm DT A, B... mit der Kennung erzeugt (Schritt 8). Zum Weiterleitungszeitpunkt, der aus der Empfangsliste hervorgeht, werden das oder die Daten- bzw. Ersatztelegramme weitergeleitet (Schritt 9).

In einer bevorzugten Ausführungsform der Erfindung wird das Auftreten eines Übermittlungsfehlers bei dem Knoten gespeichert, an welchem der Übermittlungsfehler aufgetreten ist.

Figur 5 veranschaulicht die erfindungsgemäßen Verfahrensschritte zur Übermittlung von echtzeitkritischen Daten bei einem Zielknoten. Es wird davon ausgegangen, dass zunächst ein Datentelegramm DT C, welches kein Ersatztelegramm ist, empfangen wird (Schritt 10). Der Fall, dass zuerst ein Ersatztelegramm empfangen wird, ist nicht relevant für die Erfindung. Das Datentelegramm DT C wird mit einem zugeordneten Timer-Wert gespeichert (Schritt 11). Wird ein weiteres Datentelegramm DT D mit der gleichen Kennung beim Zielknoten empfangen (Schritt 12), muss zunächst untersucht werden, ob es sich dabei um ein Ersatztelegramm handelt (Schritt 13). Die Nutzdaten des gespeicherten Datentelegramms sollen grundsätzlich nicht durch die beliebigen Nutzdaten eines Ersatztelegramms ersetzt werden. Ist das Datentelegramm DT D kein Ersatztelegramm, so wird im nächsten Schritt anhand des zugeordneten Timerwerts untersucht, ob das Datentelegramm DT C aktuell ist (Schritt 14). Ein aktuelles Datentelegramm DT C kann ersetzt werden, muss es aber nicht. Ist das Datentelegramm DT C nicht aktuell, so werden dessen Nutzdaten und dessen zugeordneter Timerwert ersetzt (Schritt 15). In einer bevorzugten Ausführungsform der Erfindung wird das Eintreffen eines Ersatztelegramms beim Zielknoten erfasst. Ist das Datentelegramm DT D ein Ersatztelegramm, so wird das Datentelegramm DT C grundsätzlich nicht ersetzt(Schritt 16).

## Patentansprüche

1. Verfahren zur Übertragung von echtzeitkritischen Daten mittels Datentelegrammen in einem Datennetz mit zumindest einem Koppelknoten, wobei die Datentelegramme eine Kennung, Nutzdaten und einen Transferstatus aufweisen und der Koppelknoten mindestens eine Sende- und Empfangsliste aufweist, wobei die Empfangsliste Angaben über die Anzahl von an dem betreffenden Koppelknoten zu empfangenden Datentelegrammen mit bestimmten Kennungen und die Sendeliste Angaben über den einer Kennung zugeordneten Weiterleitungszeitpunkt und eines oder mehrerer einer Kennung zugeordneten Sendeports beinhalten, mit folgenden Schritten:
- Erwartung (6) des Empfangs eines oder mehrerer Datentelegramme mit einer Kennung bis zum, der Kennung zugeordneten Weiterleitungszeitpunkt an einem Koppelknoten;
- Für den Fall, dass bis zum Weiterleitungszeitpunkt ein oder mehrere Datentelegramme mit der Kennung empfangen wurden: Weiterleitung (9) des oder der Datentelegramme über den oder die der Kennung zugeordneten Sendeports des Koppelknotens;
- Für den Fall, dass bis zum Weiterleitungszeitpunkt ein oder mehrere erwartete Datentelegramme mit der Kennung nicht empfangen wurden: Erzeugung (8) eines Ersatztelegramms für jedes erwartete, nicht empfangene Datentelegramm mit der Kennung und einem Transferstatus, der anzeigt, dass es sich um ein Ersatztelegramm handelt, und dessen Sendung (9) über den oder die der Kennung zugeordneten Sendeports des Koppelknotens.

2. Verfahren nach Anspruch 1, wobei das Auftreten eines Übermittlungsfehlers an dem Knoten gespeichert wird, an dem er aufgetreten ist.

3. Verfahren nach einem der Ansprüche 1 oder 2, wobei das Ersatztelegramm beliebige Nutzdaten enthält.

4. Verfahren nach einem der Ansprüche 1 bis 3, wobei das Ersatztelegramm Angaben über den Typ des aufgetretenen Übertragungsfehlers im Transferstatus enthält.

5. Verfahren nach einem der Ansprüche 1 bis 4, wobei ein von einem Datennetzknoten auf einem Datennetzpfad zu einem Zielknoten empfangenes Ersatztelegramm keine Fehlerreaktion bei dem Datennetzknoten auslöst.

6. Verfahren nach einem der Ansprüche 1 bis 5 mit folgenden, weiteren Schritten:
- Empfang (10) eines Datentelegramms bei einem Zielknoten;
- Speicherung (11) der Nutzdaten des ersten Datentelegramms, welches kein Ersatztelegramm ist, und des zugeordneten Timerwerts;
- Empfang (12) zumindest eines weiteren Datentelegramms ;
- Für den Fall, dass das weitere Datentelegramm ein Ersatztelegramm ist: kein Ersetzen (16) der gespeicherten Nutzdaten und des zugeordneten Timerwerts;
- Für den Fall, dass das weitere Datentelegramm kein Ersatztelegramm und die gespeicherten Nutzdaten laut des zugeordneten Timerwerts nicht mehr aktuell sind: Ersetzen (15) der gespeicherten Nutzdaten und des zugeordneten Timerwerts.

7. Verfahren nach Anspruch 6, wobei der Empfang eines Ersatztelegramms bei dem Zielknoten gespeichert wird.

8. Koppelknoten für einen Datennetz zur Übertragung von echtzeitkritischen Daten mittels Datentelegrammen, wobei jedes Datentelegramm eine Kennung, Nutzdaten und einen Transferstatus aufweist, mit:
- einer Empfangsliste, die Angaben über die Anzahl von an dem betreffenden Koppelknoten zu empfangenden Datentelegrammen mit bestimmten Kennungen beinhaltet;
- einer sendeliste, die Angaben über den einer Kennung zugeordneten Weiterleitungszeitpunkt und die Angabe mindestens eines Sendeports beinhaltet;
- Mitteln zum Empfang eines oder mehrerer Datentelegramme;
- Mitteln zur Speicherung des oder der Datentelegramme bis zum Weiterleitungszeitpunkt ;
- Mitteln zur Weiterleitung des oder der Datentelegramme über den oder die der Kennung zugeordneten Sendeports;
- Mitteln zur Erzeugung eines oder mehrerer Ersatztelegramme wobei das Ersatztelegramm anstelle eines erwarteten; Fehlerfreien Datentelegramms, das nicht bis zu einem weiterleitungszeitpunkt empfangen wird, erzeugt wird.

9. Koppelknoten nach Anspruch 8 mit Mitteln zur Speicherung des Auftretens eines Übermittlungsfehlers.

10. Koppelknoten nach Anspruch 8 oder 9, wobei das zu erstellende Ersatztelegramm Angaben über den Typ des Übertragungsfehlers enthält.

11. Zielknoten für einen Datennetz zur Übertragung von echtzeitkritischen Daten mittels Datentelegrammen, wobei jedes Datentelegramm eine Kennung, Nutzdaten und einen Transferstatus aufweist, mit:
- Mitteln zum Empfang eines Datentelegramms,
- Mitteln zur Speicherung der Nutzdaten eines Datentelegramms, welches kein Ersatztelegramm ist und des zugeordneten Timerwerts;
- Mitteln zur Speicherung des Empfangs eines Ersatztelegramms, wobei das Ersatztelegramm anstelle eines erwarteten, fehlerfreien Datentelegramms, das nicht bis zu einem Weiterleitungszeitpunkt empfangen wird, von einem Koppelknoten erzeugt wird und das Ersatztelegramm für jedes erwartete, nicht empfangene Datentelegramm mit einer Kennung und einem Transferstatus erzeugt wird, der anzeigt, dass es sich um ein Ersatztelegramm handelt;
- Mitteln zum Empfang zumindest eines weiteren Datentelegramms;
- Mitteln zum Ersetzen der Nutzdaten des gespeicherten, nicht mehr aktuellen Datentelegramms durch die Nutzdaten eines weiteren Datentelegramms, welches kein Ersatztelegramm ist;
- Mitteln zum Ersetzen der Nutzdaten, die für den Fall eingesetzt werden, dass das weitere Datentelegramm ein Ersatztelegramm ist wobei die Nutzdaten durch das Ersatztelegramm nicht ersetzt werden.

12. Zielknoten nach Anspruch 11 mit Mitteln zur Speicherung des Empfangs eines Ersatztelegramms.

13. Datennetz, welches mindestens einen Koppelknoten nach einem der Ansprüche 8 bis 10 aufweist.

14. Datennetz nach Anspruch 13, welches mindestens einen Zielknoten nach Anspruch 11 oder 12 aufweist.

15. Computerprogrammprodukt für einen Koppelknoten in einem Datennetz zur Übertragung von echtzeitkritischen Daten mittels Datentelegrammen, wobei jedes Datentelegramm eine Kennung, Nutzdaten und einen Transferstatus aufweist, zur Durchführung eines Verfahrens mit folgenden Schritten:
- Erwartung des Empfangs eines oder mehrerer Datentelegramme mit einer Kennung bis zum, der Kennung zugeordneten Weiterleitungszeitpunkt an einem Koppelknoten;
- Für den Fall, dass bis zum Weiterleitungszeitpunkt ein oder mehrere Datentelegramme mit der Kennung empfangen wurden: Weiterleitung des oder der Datentelegramme über den oder die der Kennung zugeordneten Sendeports des Koppelknotens;
- Für den Fall, dass bis zum Weiterleitungszeitpunkt ein oder mehrere erwartete Datentelegramme mit der Kennung nicht empfangen wurden: Erzeugung eines Ersatztelegramms für jedes erwartete, nicht empfangene Datentelegramm mit der Kennung und einem Transferstatus, der anzeigt, dass es sich um ein Ersatztelegramm handelt, und dessen Sendung über den oder die der Kennung zugeordneten Sendeports des Koppelknotens.

16. Computerprogrammprodukt für einen Zielknoten in einem Datennetz zur Übertragung von echtzeitkritischen Daten mittels Datentelegrammen, wobei jedes Datentelegramm eine Kennung, Nutzdaten und einen Transferstatus aufweist, zur Durchführung eines Verfahrens mit folgenden Schritten:
- Empfang eines Datentelegramms bei einem Zielknoten;
- Speicherung der Nutzdaten des ersten Datentelegramms, welches kein Ersatztelegramm ist, und des zugeordneten Timerwerts;
- Empfang zumindest eines weiteren Datentelegramms;
- Für den Fall, dass das weitere Datentelegram ein Ersatztelegramm ist: kein Ersetzen der gespeicherten Nutzdaten und des zugeordneten Timerwertes;
- Für den Fall, dass das weitere Datentelegram kein Ersatztelegramm ist und die gespeicherten Nutzdaten laut des zugeordneten Timerwerts nicht mehr aktuell sind: Ersetzen der gespeicherten Nutzdaten und des zugeordneten Timerwertes, wobei das Ersatztelegramm anstelle eines erwarteten, fehlerfreien Datentelegramms, das nicht bis zu einem Weiterleitungszeitpunkt empfangen wird, erzeugt wird.

## Claims

1. Method for transmission of real-time critical data using data telegrams in a data network with at least one coupling node, in which case the data telegrams feature an identification, useful data and a transfer status and the coupling node features at least a transmit list and a receiver list, with the transmit lists containing information about the number of data telegrams to be received at the corresponding coupling node with specific identifications and the send list containing information about the forwarding time assigned via an identification and one or more transmit ports assigned to an identification, with the following steps:
- Expectation (6) of the receipt of one or more data telegrams with an identification of the forwarding time assigned to the identification at a coupling of node;
- For the case in which one or more data telegrams with the identification was received by the forwarding time: Forwarding (9) of the data telegram or telegrams via the transmit port or ports of the coupling node assigned to the identification;
- For the case in which one or more expected data telegrams with the identification was not received by the forwarding time: Creation (8) of a replacement telegram for each expected, not received data telegram with the identification and data transfer status that indicates that this telegram is a replacement telegram and of its application (9) via the transmit port or ports of the coupling node assigned to the identification.

2. Method in accordance with claim 1, in which case the occurrence of a transmission error is stored at the node at which it occurred.

3. Method in accordance with one of the claims 1 or 2, with the replacement telegram containing any useful data.

4. Method in accordance with one of the claims 1 to 3, with the replacement telegram containing information about the type of transmission error that has occurred in the transfer status.

5. Method in accordance with one of the claims 1 to 4, where a replacement telegram.received by a data network node on a data path to a destination node does not trigger an error reaction at the data network node.

6. Method in accordance with one of the claims 1 to 5 with the following, further steps:
- Receipt (10) of a data telegram at a destination node;
- Storage (11) of the useful data of the first data telegram which is not a replacement telegram and of the assigned timer value;
- Receipt (12) of at least one further data telegram;
- For the case in which the further data telegram is a replacement telegram: no replacement (16) of the stored useful data and of the assigned timer value;
- For the case in which the further data telegram is not a replacement telegram and the stored useful data is no longer current according to the assigned timer value: Replacement (15) of the stored useful data and of the assigned timer value.

7. Method in accordance with claim 6, with the receipt of a replacement telegram at the destination node being stored.

8. Coupling node for a data network for transmission of realtime-critical data by means of data telegrams, in which case each data telegram features an identification, useful data and a transfer status, with:
- a receive list which contains information about the number of data telegrams with specific identifications to be received at the coupling node concerned;
- a receive list which contains information about the forwarding time assigned to an identification and information about at least one transmit port;
- means for receiving one or more data telegrams; means for storing the data telegram or telegrams until the transfer time;
- means for forwarding the data telegram or telegrams via the transmit port or transmit ports assigned to the identification;
- means for creating one or more replacement telegrams, with the replacement telegram being generated instead of an expected, error-free data telegram, which is not received until a forwarding time.

9. Coupling node in accordance with claim 8 with means for storing the occurrence of a transmission error.

10. Coupling node in accordance with claim 8 or 9, with the replacement telegram to be created containing information about the type of transmission error.

11. Destination node for a data network for transmission of realtime-critical data by means of data telegrams, in which case each data telegram features an identification, useful data and a transfer status, with:
- means for receiving a data telegram;
- means for storing the receipt of a replacement telegram, in which case the replacement telegram is generated by a coupling node instead of an expected, error-free data telegram which is not received until a forwarding time and the replacement telegram for each expected, non-received data telegram is generated with an identification and a transfer status, which indicates that this is a replacement; means for receiving at least one further data telegram;
- means for replacing the useful data of the stored, no longer current data telegram with the useful data of a further data telegram which is not a replacement telegram;
- means for replacing the useful data which is used for the case in that the further data telegram is a replacement telegram, with the useful data not being replaced by the replacement telegram.

12. Destination node in accordance with claim 11 with means for storing the receipt of a replacement telegram.

13. Data network which features at least one of coupling node in accordance with one of the claims 8 to 10.

14. Data network in accordance with claim 13 which features at least one destination node in accordance with claim 11 or 12.

15. Computer program product for a coupling node in a data network for transmission of realtime-critical data by means of data telegrams, in which case each data telegram features an identification, useful data and a transfer status, for executing a method with the following steps:
- Expecting the receipt of one or more data telegrams with an identification up to the forwarding time assigned to the identification at a coupling node;
- For the case in which one or more data telegrams with the identification was received by the forwarding time: Forwarding of the data telegram or telegrams via the send port or send ports of the coupling node assigned to the identification;
- For the case in which one or more expected data telegrams with the identification was not received by the forwarding time: Creation of a replacement telegram for each expected, not received data telegram with the identification and data transfer status which indicates that this telegram is a replacement telegram and its transmission via the transmit port or ports of the coupling node assigned to the identification.

16. Computer program product for a destination node in a data network for transmission of realtime-critical data by means of data telegrams, in which case each data telegram features an identification, useful data and a transfer status, for executing a method with the following steps:
- Receipt of a data telegram at a destination node;
- Storage of the useful data of the first data telegram which is not a replacement telegram and of the assigned timer value;
- Receipt of at least one further data telegram;
- For the case in which the further data telegram is a replacement telegram: no replacement of the stored useful data and of the assigned timer value;
- For the case in which the further data telegram is not a replacement telegram and the stored useful data is no longer current according to the assigned timer value: Replacement of the stored useful data and of the assigned timer value, in which case the replacement telegram is generated instead of an expected, error-free data telegram, which is not received until a forwarding time.

## Revendications

1. Procédé de transmission de données critiques à temps réel au moyen de télégrammes de données dans un réseau de données comportant au moins un noeud de connexion, les télégrammes de données comportant un identificateur, des données utiles et un statut de transfert et le noeud de connexion comportant au moins une liste d'émission et une liste de réception, la liste de réception contenant des indications sur le nombre de télégrammes de données ayant un identificateur déterminé et à recevoir au noeud de connexion considéré et la liste d'émission contenant des indications sur l'instant de retransmission associé à un identificateur et sur un ou plusieurs ports d'émission associés à un identificateur, avec les étapes suivantes :
- à un noeud de connexion, attente (6) de la réception d'un ou plusieurs télégrammes de données ayant un identificateur jusqu'à l'instant de retransmission associé à l'identificateur ;
- si un ou plusieurs télégrammes de données ayant l'identificateur ont été reçus avant l'instant de retransmission : retransmission (9) du ou des télégrammes de données via le ou les ports d'émission du noeud de connexion qui sont associés à l'identificateur ;
- si un ou plusieurs télégrammes de données attendus ayant l'identificateur n'ont pas été reçus avant l'instant de retransmission : production (8) d'un télégramme de remplacement pour chaque télégramme de données attendu et non reçu avec l'identificateur et avec un statut de transfert qui indique qu'il s'agit d'un télégramme de remplacement et émission (9) de celui-ci via le ou les ports d'émission du noeud de connexion qui sont associés à l'identificateur.

2. Procédé selon la revendication 1, dans lequel l'apparition d'une erreur de transmission est mémorisée dans le noeud dans lequel ladite erreur est apparue.

3. Procédé selon l'une des revendications 1 ou 2, dans lequel le télégramme de remplacement contient des données utiles quelconques.

4. Procédé selon l'une des revendications 1 à 3, dans lequel le télégramme de remplacement contient des indications sur le type de l'erreur de transmission apparue dans le statut de transfert.

5. Procédé selon l'une des revendications 1 à 4, dans lequel un télégramme de remplacement reçu par un noeud de réseau de données sur un trajet de réseau de données vers un noeud de destination ne déclenche pas de réaction d'erreur dans le noeud de réseau de données.

6. Procédé selon l'une des revendications 1 à 5, comportant les étapes suivantes :
- réception (10) d'un télégramme de données à un noeud de destination ;
- mémorisation (11) des données utiles du premier télégramme de données qui n'est pas un télégramme de remplacement et de la valeur temporelle associée ;
- réception (12) d'au moins un autre télégramme de données ;
- si l'autre télégramme de données est un télégramme de remplacement : pas de remplacement (16) des données utiles mémorisées et de la valeur temporelle associée ;
- si l'autre télégramme de données n'est pas un télégramme de remplacement et si les données utiles mémorisées ne sont plus actuelles selon la valeur temporelle associée : remplacement (15) des données utiles mémorisées et de la valeur temporelle associée.

7. Procédé selon la revendication 6, dans lequel la réception d'un télégramme de remplacement dans le noeud de destination est mémorisée.

8. Noeud de connexion pour un réseau de données pour la transmission de données critiques à temps réel au moyen de télégrammes de données, chaque télégramme de données comportant un identificateur, des données utiles et un statut de transfert, avec:
- une liste de réception qui contient des indications sur le nombre de télégrammes de données ayant des identificateurs déterminés et devant être reçus au noeud de connexion considéré ;
- une liste d'émission qui contient des indications sur l'instant de retransmission associé à un identificateur et l'indication d'au moins un port d'émission ;
- des moyens pour la réception d'un ou plusieurs télégrammes de données ;
- des moyens pour la mémorisation du ou des télégrammes de données jusqu'à l'instant de retransmission ;
- des moyens pour la retransmission du ou des télégrammes de données par l'intermédiaire du ou des ports d'émission associés à l'identificateur ;
- des moyens pour la production d'un ou plusieurs télégrammes de remplacement, le télégramme de remplacement étant produit à la place d'un télégramme de données attendu sans erreur qui n'a pas été reçu avant un instant de retransmission.

9. Noeud de connexion selon la revendication 8, avec des moyens pour la mémorisation de l'apparition d'une erreur de transmission.

10. Noeud de connexion selon la revendication 8 ou 9, le télégramme de remplacement à élaborer contenant des indications sur le type de l'erreur de transmission.

11. Noeud de destination pour un réseau de données pour la transmission de données critiques à temps réel au moyen de télégrammes de données, chaque télégramme de données comportant un identificateur, des données utiles et un statut de transfert, avec :
- des moyens pour la réception d'un télégramme de données ;
- des moyens pour la mémorisation des données utiles d'un télégramme de données qui n'est pas un télégramme de remplacement et de la valeur temporelle associée ;
- des moyens pour la mémorisation de la réception d'un télégramme de remplacement, le télégramme de remplacement étant produit par un noeud de connexion à la place d'un télégramme de données attendu sans erreur qui n'a pas été reçu avant un instant de retransmission et le télégramme de remplacement étant produit pour chaque télégramme de données attendu et non reçu avec un identificateur et avec un statut de transfert qui indique qu'il s'agit d'un télégramme de remplacement ;
- des moyens pour la réception d'au moins un autre télégramme de données ;
- des moyens pour le remplacement des données utiles du télégramme de données mémorisé mais qui n'est plus actuel par les données utiles d'un autre télégramme de données qui n'est pas un télégramme de remplacement ;
- des moyens pour le remplacement des données utiles qui sont utilisées si l'autre télégramme de données est un télégramme de remplacement, les données utiles n'étant pas remplacées par le télégramme de remplacement.

12. Noeud de destination selon la revendication 11, avec des moyens pour la mémorisation de la réception d'un télégramme de remplacement.

13. Réseau de données, qui comporte au moins un noeud de connexion selon l'une des revendications 8 à 10.

14. Réseau de données selon la revendication 13, qui comporte au moins un noeud de destination selon la revendication 11 ou 12.

15. Programme informatique pour un noeud de connexion dans un réseau de données pour la transmission de données critiques à temps réel au moyen de télégrammes de données, chaque télégramme de données comportant un identificateur, des données utiles et un statut de transfert, pour la mise en oeuvre d'un procédé comportant les étapes suivantes :
- à un noeud de connexion, attente de la réception d'un ou plusieurs télégrammes de données ayant un identificateur jusqu'à l'instant de retransmission associé à l'identificateur ;
- si un ou plusieurs télégrammes de données ayant l'identificateur ont été reçus avant l'instant de retransmission : retransmission du ou des télégrammes de données via le ou les ports d'émission du noeud de connexion qui sont associés à l'identificateur ;
- si un ou plusieurs télégrammes de données attendus ayant l'identificateur n'ont pas été reçus avant l'instant de retransmission : production d'un télégramme de remplacement pour chaque télégramme de données attendu et non reçu avec l'identificateur et avec un statut de transfert qui indique qu'il s'agit d'un télégramme de remplacement et émission de celui-ci via le ou les ports d'émission du noeud de connexion qui sont associés à l'identificateur.

16. Programme informatique pour un noeud de destination dans un réseau de données pour la transmission de données critiques à temps réel au moyen de télégrammes de données, chaque télégramme de données comportant un identificateur, des données utiles et un statut de transfert, pour la mise en oeuvre d'un procédé comportant les étapes suivantes :
- réception d'un télégramme de données à un noeud de destination ;
- mémorisation des données utiles du premier télégramme de données qui n'est pas un télégramme de remplacement et de la valeur temporelle associée ;
- réception d'au moins un autre télégramme de données ;
- si l'autre télégramme de données est un télégramme de remplacement : pas de remplacement des données utiles mémorisées et de la valeur temporelle associée;
- si l'autre télégramme de données n'est pas un télégramme de remplacement et si les données utiles mémorisées ne sont plus actuelles selon la valeur temporelle associée : remplacement des données utiles mémorisées et de la valeur temporelle associée, le télégramme de remplacement étant produit à la place d'un télégramme de données attendu sans erreur qui n'a pas été reçu avant un instant de retransmission.
